Europäisches Patentamt

(19) European Patent Office

Office européen des brevets

(11) Publication number: **0 084 218**

A1

(12) **EUROPEAN PATENT APPLICATION**

(21) Application number: 82306335.9

(22) Date of filing: 29.11.82

(51) Int. Cl.³: **B 60 T 17/08**
**F 16 D 65/32**

(30) Priority: 02.12.81 GB 8136343
06.03.82 GB 8206675

(43) Date of publication of application:
27.07.83 Bulletin 83/30

(84) Designated Contracting States:
BE DE FR IT NL SE

(71) Applicant: BENDIX LIMITED
Douglas Road
Kingswood, Bristol BS15 2NL(GB)

(72) Inventor: Wheeler, Arnold Courtney
5 Woodcote
Mount Hill Hanham Bristol(GB)

(72) Inventor: Round, Alan
26 Kemble Close
Kingswood Bristol(GB)

(72) Inventor: Jennison, Paul
25 Dyrham Parade
Patchway Bristol(GB)

(74) Representative: Turner, Alan Reginald
c/o Bendix Limited Douglas Road
Kingswood, Bristol BS15 2NL(GB)

(54) Fluid pressure operable actuators.

(57) A fluid pressure operable tube-mounted brake actuator has a housing (1, 2) containing a pressure responsive diaphragm (4) which divides the housing into a pressure chamber (6) and a non-pressure chamber (7). The latter having an inwardly projecting end (11) of the tube and an actuator output rod (8) which passes through the tube and a flexible contaminant excluding boot (12) one end (13) of which engages a point on the rod and the other end (15) is held in engagement with the inner end of the tube by means of pressed in fastening member (16) which engages the internal surface of the tube.

FIG.1

EP 0 084 218 A1

Fluid Pressure Operable Actuators

This invention relates to fluid pressure operable actuators and relates especially but not exclusively to fluid pressure operable brake actuators.

Actuators are known especially for vehicle braking systems which include a main body divided by a pressure responsive member into a pressure chamber and a non-pressure chamber. Application of fluid pressure to the pressure chamber acts via the diaphragm or a push plate carried by an output rod to apply the brakes. One type of such actuator is mounted on a brake mechanism by means of a tube via the bore of which the rod is able to engage for example with a member connected to the wedge of a twin wedge brake.

In such a brake actuator there is a risk of contamination of the working parts by the ingress of road dirt, salt or water transmitted via the tube between the vented non-pressure chamber and the brake mechanism and the present invention seeks to reduce this risk.

According to the present invention there is provided a fluid pressure operable actuator comprising a housing with a pressure responsive member dividing the housing into a pressure chamber and a non-pressure chamber the non-pressure chamber having an inward projecting tubular spigot, an actuator output rod operatively connected to the pressure responsive member and passing through the tubular spigot and a flexible boot one end of which is sealingly connected to a point on the rod and the other end of which is sealingly retained around the tubular spigot by means of a pressed-in fastening engaging with the internal surface of the tubular spigot, the whole providing a barrier against passage of contaminants between the non-pressure chamber and the tube.

In order that the invention may be more clearly understood and readily carried into effect, the same will be further described by way of example with reference to the accompanying drawings of which

Fig. 1 illustrates a typical tube-mounted pneumatic brake actuator including one embodiment of the invention and,

Fig. 2 illustrates in greater detail the construction of the boot and clip employed in Fig. 1 and

Figs. 3, 4, and 5 illustrate possible alternatives to the arrangement of Fig. 2.

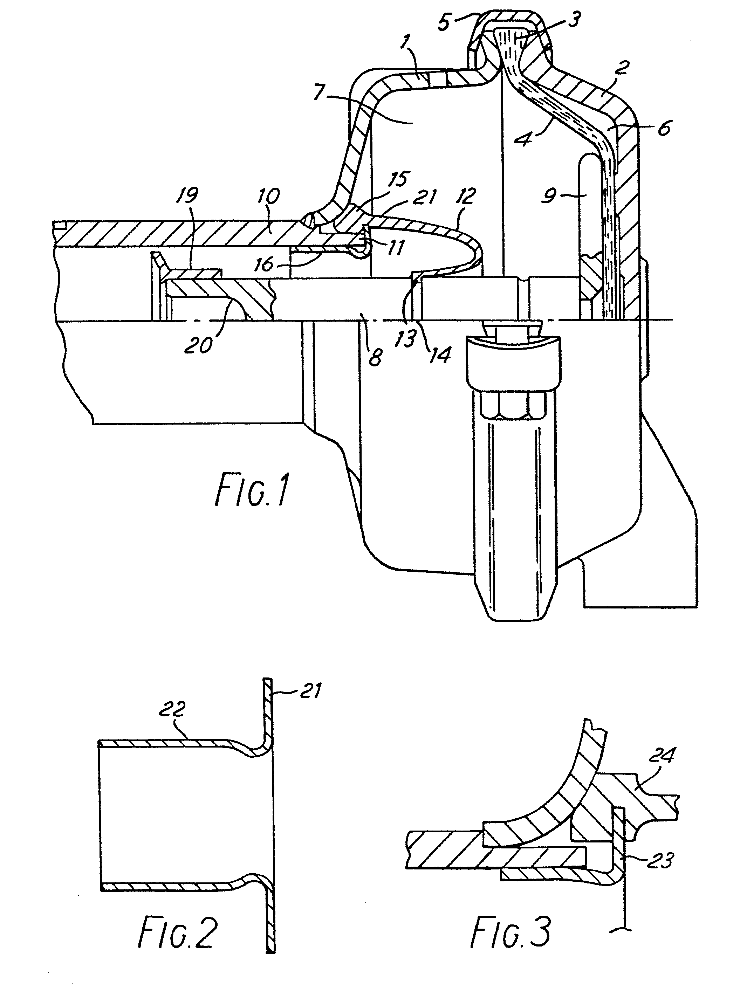

Referring to Fig. 1, the fluid pressure operable brake actuator comprises a housing formed of a first part 1 and a second part 2 between which a peripheral bead 3 of a pressure responsive member in the form of a diaphragm 4 is clamped as shown by a clamping ring 5. The arrangement is thus such as to provide a pressure chamber 6 between the diaphragm 4 and the part 2 and a non-pressure chamber 7 between the diaphragm 4 and the part 1. To enable the pressure responsive member 4 to exert a force an output rod 8 is provided carrying a push plate 9 which bears against the non-pressure side of the diaphragm. The rod 8 extends into a mounting tube 10 welded into the part 1 and presents an inwardly projecting tubular spigot 11.

In order to prevent the passage of contaminants such as road dirt, salt and water from passing through the tube 10 between the non-pressure chamber 7 and a brake mechanism to be actuated by the road & a moulded flexible rubber boot 12 is provided which has a bead 13 engaging a groove 14 of the rod 8 and a larger diameter bead 15 at its other end sealingly retained against the wall of the part 1 and spigot 11 by a pressed-in retaining member 16. The member 16 is tubular and is firmly held in the internal diameter of the tube 10 and has an annular flange 21 for internally engaging the inside of the boot. The boot 12 is of re-entrant form such that it executes a rolling motion during movement of the rod 8, away from the fully withdrawn position shown, towards a brake applying position. Such movement can, therefore, be of substantial stroke. The outward end of the rod 8 is provided with a guiding piece 19 to guide the rod in the bore of the tube 10 and also is provided with a socket 20 to receive the inward end of a rod for actuating a double - wedge brake mechanism into which the outer end of the tube 10 is screwed. Such actuation takes place in known manner by virtue of air pressure applied to chamber 6.

Referring to Fig. 2, this shows on greater scale the pressed-in fastening 16 with a portion 22 giving a tight fit in the inner bore of tube 10 and a flange 21 the diamter of which is greater than the outer diameter of the tubular spigot 11 so as to grip the bead 15.

Referring to Fig. 3, this shows in diagrammatical form an alternative manner of configuration 24 for the bead 15 and the pressed-in member 16 wherein the member 16 is again provided with an annular flange 23 onto which moulded bead 24 can be fitted to retain it in position.

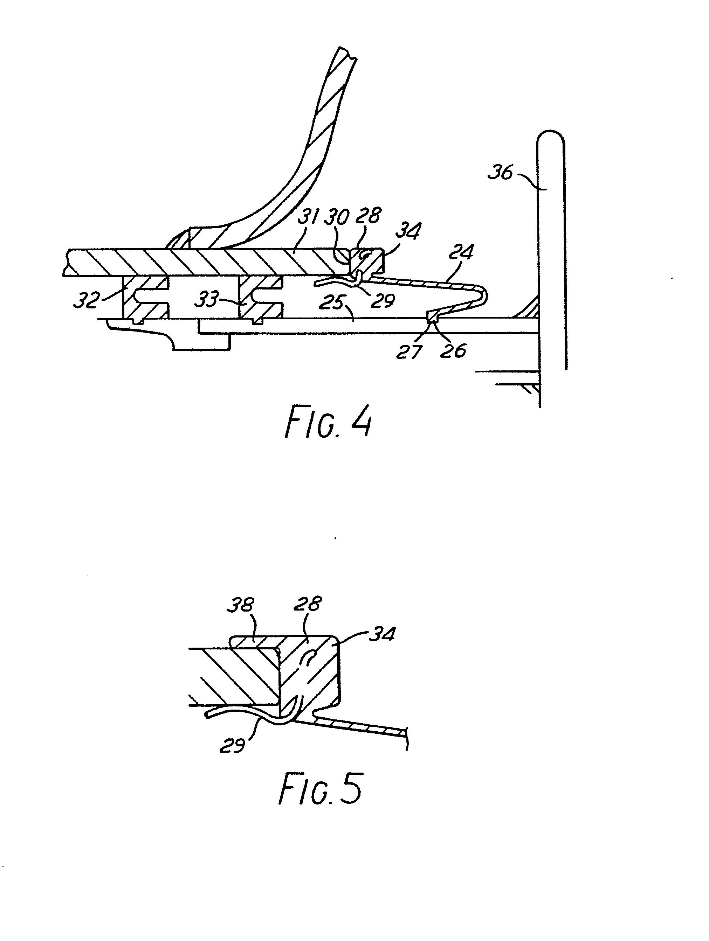

Referring now to Fig. 4, which shows a diaphragm push plate 36 & the non-pressure plate of an actuator such as described above. It is seen that the push rod 25 of the actuator is guided by being carried in tube 31 by a pair of moulded guides 32 and 33 and a flexible resilient boot 24 is provided which like that of Fig. 1 has a smaller diameter end 27 located in a groove 26 on the push rod. However, the larger diameter end of the boot is provided with a thickened radially outwardly extending flange 28 moulded into which there is provided a fastening in the form of an annular clip 29 of brass or other metal which is again a press fit into the spigot formed by the inner end of the tube 31. One face of the flange 28 is thus held in sealing engagement with the end face 30 of the tube. The flange 28 is also provided with an upstanding moulded portion 34 against which the push plate 36 is engageable in the full stroke position of the actuator. By virtue of the reduced range of the diameters of the gaiter 24 from one end to the other an improved rolling action may thus be achieved and by appropriate choice of the length of the flexible portion and in the full stroke position when the plate 36 engages the portion 34, there is negligible likelihood of chafing by pinching of the flexible part of 24 between the end 30 of the tube and the push plate 36 of the actuator.

- 5 -    0084218

In an alternative construction of the boot, the moulded-in fastening member 29 may extend around the outside diameter of the inner end of the tube 31.

Again, in either case and as shown in Fig. 5, the material of the flange 28 may be moulded as at 38 to extend around the outer diameter of the inner portion of the tube so that the bead of the gaiter fits on the tube in the manner of a cap.

Furthermore, whilst in the case of the embodiment of Fig. 1 the fastening 16 is assembled as a separate item it may be designed for moulding integrally into the bead 15 of the boot and other variants and adaptations of the present concept may now be readily apparent to skilled persons in view of the alternatives described in the foregoing.

**0084218**

CLAIMS

1.  A fluid pressure operable actuator comprising a housing (1, 2) with a pressure responsive member (4) dividing the housing into a pressure chamber (6) and a non-pressure chamber (7) the non-pressure chamber (7) having an inward projecting tubular spigot (11) and actuator output rod (8) operatively co-operable with the pressure responsive member and passing through the tubular spigot and a flexible contaminant excluding boot (12) one end (13) of which is sealingly connected to a point on the rod and characterised by the other end (15) being sealingly retained in engagement with the tubular spigot by means of a pressed-in fastening (16) engaging with the internal surface of the tubular spigot. The boot having a flexible mid portion allowing free relative movement of the ends for providing a barrier against passage of contaminants between the non-pressure chamber and the tube.

2.  A fluid pressure operable actuator as claimed in claim 1, characterised by said other end of the boot comprising a bead (15) adapted to engage around the spigot (11) and said fastening having an annular flange (21) the outer diameter of which is greater than that of the spigot around which the bead is engageable.

3.  A fluid pressure operable actuator as claimed in claim 2, characterised by the fastening having an annular flange (23) retained within a moulded-in annular groove of the bead (24)

4. A fluid pressure operable actuator as claimed in claim 1, characterised by the boot having a thickened flange (28) which abuts the inward end of the tubular spigot.

5. A fluid pressure operable actuator as claimed in claim 4 characterised by the boot having its flexible mid portion adjoining the inner circumference of the thickened flange.

6. A fluid pressure operable actuator as claimed in claim 5 characterised by the thickened flange having a point (34) which stands proud thereof to form a full stroke stop for the actuator.

7. A fluid pressure operable actuator as claimed in any of claims 1 - 6 characterised by said fastening (29) being moulded into the said other end of the boot.

8. A fluid pressure operable actuator substantially as described herein with reference to Fig. 1 or with a boot in accordance with Fig. 3, Fig. 4 or Fig. 5 of the accompanying drawings..

Bendix Limited
Douglas Road
Kingswood, BRISTOL. BS15 2NL.

1/2

0084218

Attorney's Ref: K.150

FIG.1

FIG.2

FIG.3

0084218

Bendix Limited
Douglas Road
Kingswood, BRISTOL. BS15 2NL.

Attorney's Ref: K.150

FIG. 4

FIG. 5

**European Patent Office**

## EUROPEAN SEARCH REPORT

Application number

EP 82 30 6335

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | B 60 T 17/08 |
| X | DE-U-7 630 598 (KNORR-BREMSE) | 1,2,4, 5 | F 16 D 65/32 |
| | * Figures 1-3 * | | |
| | ----- | | |

| | | | TECHNICAL FIELDS SEARCHED (Int. Cl. ³) |
|---|---|---|---|
| | | | B 60 T 17/00 |
| | | | F 16 D 65/00 |

The present search report has been drawn up for all claims

| Place of search BERLIN | Date of completion of the search 17-02-1983 | Examiner LUDWIG H J |
|---|---|---|